# EUROPEAN PATENT SPECIFICATION

(11) **EP 3 823 851 B1**
(45) Date of publication and mention of the grant of the patent: **28.01.2026**
(21) Application number: 19752226.1
(22) Date of filing: 18.07.2019
(51) Int. Cl.: B60H 1/24, B60J 9/04, F24F 9/00

(54) **ZONE SEPARATION IN A VEHICLE**
ZONENTRENNUNG IN EINEM FAHRZEUG
SÉPARATION DE ZONES DANS UN VÉHICULE

(30) Priority: 19.07.2018 GB 201811801
(43) Date of publication of application: 26.05.2021
(73) Proprietor: Bentley Motors Limited, Crewe, Cheshire CW1 3PL (GB)
(72) Inventor: MCKINLAY, Andrew James, Crewe, Cheshire CW11 3RE (GB)
(74) Representative: Wilson Gunn
(86) International application number: PCT/GB2019/052010
(87) International publication number: WO 2020/016587

(56) References cited:
- EP-A1- 2 607 155
- EP-A2- 0 543 289
- WO-A1-2018/049159
- DE-A1- 102012 107 863
- JP-A- 2001 239 820
- JP-A- 2003 326 951
- JP-A- 2015 104 980
- JP-A- S 611 528
- US-A- 5 765 635
- US-A1- 2003 186 643

## Description

### Technical Field of the Invention

The present invention relates to separation of different zones in vehicles. In particular, but not exclusively, the invention relates to separation of different zones in a passenger compartment of an automobile.

### Background to the Invention

Automobiles are known in which air blowers in the passenger compartment are independently controllable so as to blow hotter or colder air into one zone than another. This allows different passengers (for example the driver and a front seat passenger, or even driver, front seat passenger and rear-seat passengers, or each rear seat passenger) to have a different heat setting in their zone of the passenger compartment.

Normally, there is mixing between the zones, which can lead to blowers competing with each other to achieve the correct temperature in their respective zone, or to neither zone being held at the right temperature throughout its volume.

One approach to dividing zones in an automobile is to provide a physical barrier, such as found in certain taxis, for example the TX range manufactured by London EV Company Limited (formerly The London Taxi Corporation Limited) and its predecessors. This has certain disadvantages; speakers and microphones are required to allow conversation between driver and passenger, and outside the commercial environment, for example in a domestic automobile (i.e. a family car, sports car, or the like), physical separation between the driver and his/her passengers is normally considered undesirable.

US5765635A described an air conditioner for cooling or heating partitioned zones of an interior of a vehicle includes an air conditioning part and air curtain forming apparatus. The air conditioning part cools and heats intake air. The cooled or heated intake air is supplied to the air curtain forming apparatus. In the air curtain forming apparatus, the cooled or heated air entering the air feeder from the air conditioning part is discharged to an air curtain forming part arranged in plural positions of the interior of the vehicle, and sprayed to form the air curtain by an air spray nozzle part and air suction nozzle part. The sprayed air is admitted to an air-exhaust part to be recirculated to the air feeder or externally discharged. A microprocessor controls the air conditioning part and air curtain forming apparatus by receiving various control signals from a temperature/operation controlling part, a temperature/recognition sensor and a mode selector.

JP2001239820A describes a suction port of an air cleaner provided near an occupant head part on a front seat, a blow-off port lateral in the vehicle width direction provided between the front seat and a rear seat, and air is blown off approximately vertically toward the floor part in a cabin. The air cleaner is operated by the forced amount, an air conditioner in the front part in the cabin is interlocked to make preset value operation with an air intake, and air is blown off from a defroster. Therefore, an air curtain is formed between the front seat and the rear seat, diffusion of pollution can be prevented, the flow of air circulating in a space around the occupant on the front seat is formed by the air conditioner and the air cleaner and limited to a local space, and efficient air conditioning and an air cleaning can be performed in a short time, and power can be saved.

JPS611528A describes an air curtain on a floor surface inside a car room for ventilating independently each peripheral space of four rider seats, there are provided with each of air blowoff ports, and air intake ports are set up crosswise on a ceiling surface inside of the car room a face-to-face manner. Each of these air blowoff ports is connected to a fresh air leading-in blower being set up in an engine via each of ports while each of these air intake ports is connected to an exhausting blower being set up in a trunk room, via a duct respectively. Thus, in the case where the inside the car room is partially polluted by cigarette smoke, the polluted air is preventable from spreading inside the car room.

EP0543289A2 describes an air conditioning apparatus for a vehicle for air conditioning only a zone adjacent a person sitting on a seat. A bottom duct has inlets which are located laterally of a sitting part of the seat, and a top duct has an outlet located above a head rest portion of the seat. Arranged in the bottom duct is a blower fan, evaporator and heater. The rotation of the fan causes the air to be sucked into the duct via the inlets, and is subjected to the heat exchange with the evaporator and the heater to obtain a desired temperature of the air. The air is discharged downwardly from the top outlet to the bottom inlet, so that air flows for air conditioning are crated along an area only around the person sitting on the seat.

DE102012107863A1 describes a vehicle with a ventilating/air-conditioning system blowing air into an interior of the vehicle via air nozzles. The air nozzles are arranged around a motor vehicle seat e.g. driver seat, such that the air emitted from the nozzles produces an air swirl around the seat with an approximately perpendicular rotational axis. The nozzles are vertically provided above each other. The nozzles include outer and inner air nozzle elements relative to the rotational axis. An air guide element supports an air swirl formation.

WO2018/049159A1 describes A vehicle occupant air curtain system including a seat that has a seat cushion and a seat back. The seat back has a region that is configured to be arranged above an occupant shoulder. An air vent is supported on the seat back and is arranged in the region. The air vent is configured to be directed adjacent to a seated occupant's head and neck.

EP2607155A1 describes Vehicle seats which may be configured as part of an airflow management system capable of controlling the environment in the immediate vicinity of seated passengers. A vehicle seat may include any number of air intake and discharge ports arranged so that discharged air flows along the body of the seated passenger on its way to the air intake ports. The air may be heated and/or cooled along a system air flow path to have an immediate effect on the comfort of the seated passenger without the need to heat or cool the entire vehicle cabin. Less energy is consumed to achieve a vehicle seat-specific climate than to achieve an overall interior cabin climate. The airflow management system may include more than one such vehicle seat, and the airflow characteristics with respect to each vehicle seat may be separately controllable.

JP2015104980A describes a vehicular air-conditioning system includes an air-conditioning device which converts air sucked into a draft air duct by an air blower into desired air-conditioning wind by a heat exchange part to blow the wind to the interior of a passenger compartment, a suction port which is arranged in the periphery of seating of a driver, an air outlet which is connected to the suction port via a duct, provided between a driver seat and a front passenger seat and blows the air-conditioning wind upward, and forms an air curtain in the periphery of the driver.

The present invention seeks to provide an improved method of separating zones, which could improve the ability of the different zones to remain at the right temperature throughout and reduce the competition between blowers, thereby reducing the amount of air blown onto occupants, which can have a drying effect and can increase cabin noise.

### Summary of the Invention

According to a first aspect of the invention there is provided a vehicle comprising a passenger compartment, the vehicle comprising a plurality of air curtain units operable to produce one or more air curtains to separate the passenger compartment into a plurality of zones, wherein the plurality of zones surround an occupant; a ventilation system is operable to supply air of a different condition into the different zones; and further comprising a plurality of blowers in the different zones for blowing the air of different conditions supplied by the ventilation system into the separated zones.

An air curtain is a directionally-controlled broad stream of air which reduces the infiltration or transfer of air from one side of the airstream or "curtain" to the other thereby separating one zone from another. For example, outside the vehicular environment, air curtain units are provided in commercial refrigerators to separate the interior of the refrigerator from the surrounding environment, keeping cool air within the refrigerator, whilst allowing customers to extract items from the refrigerator simply by passing their hand through the sheet (or "curtain") of moving air.

The provision of air curtains within the passenger compartment of a vehicle in order to separate it into zones can have numerous advantages - for example, as compared to the situation where there is no separation between zones, it can prevent blowers working against one another to achieve different results and allow passengers in different compartments to tailor the environment in their zone to their liking (e.g. different temperature, air-con on/off, external or recirculated air and so on).

The air curtain unit may comprise a long thin opening in one or more nozzles, or a plurality of adjacent nozzles, arranged to direct pressurised air in a broad (and thin) stream. A long thin opening produces a stream of air that is continuous from the moment it exits the nozzle, whilst a plurality of adjacent nozzles produce individual streams that converge to produce a continuous air curtain. Output from individual nozzles may be individually controllable. This can produce a non-uniform air curtain. This can allow the curtain to fit to a shape - for example, an air curtain extending down the middle of an automobile may need to be stronger in certain areas where it must extend from ceiling to floor than other areas, such as where an arm-rest or a central seat is provided. Control of individual nozzles can also be used to change the shape of zones and/or number of zones that the passenger compartment is divided into.

The air curtain unit may comprise a return duct to return and recirculate air from the curtain.

The ventilation system may be selectively operable to supply cool or hot air to the blowers.

The ventilation system may be an air conditioning system, selectively operable to supply conditioned, cold, cool or hot air to the blowers.

The ventilation system may be selectively operable to supply external or recirculated air.

The ventilation system may be selectively operable to supply air at a selectable humidity.

The ventilation system may be selectively operable to supply perfumed or non-perfumed air.

The vehicle may comprise a controller for controlling the flow of air from the blowers in the different zones separated by the or each air curtain. The controller may control the ventilation system. The controller may individually control the blowers.

An input device may be provided for selecting the condition of air from the blowers, for example, air temperature. The input device may be a dial, button, touchscreen or the like, to select a temperature of the incoming air (to the passenger compartment or a zone thereof) or an intended temperature of the passenger compartment (or zone thereof) between a minimum and a maximum temperature.

The or a controller may control the or each air curtain unit.

The controller may be capable of switching the air curtain between an active and an inactive state independently of the state of the blowers. This is particularly useful in the event that the occupants of the vehicle are content to all receive air in the same condition (e.g. temperature and humidity) from the blowers. In this case, deactivation of the air curtain unit can save energy.

One or more or each of the plurality of zones may comprise a zone surrounding only one seat.

One or more or each of the plurality of zones may comprise a zone surrounding more than one seat.

For example, a first zone may comprise only a driver's seat, a second zone may comprise a front seat passenger's seat and a third zone may comprise a plurality of rear seat passengers' seats.

One or more air curtain units may be provided to separate the plurality of zones - for example, air curtains (or air curtain units) could be provided between each of the seats for (a) the front seat driver and the front seat passenger; (b) the front seat passenger and a rear seat passenger disposed behind the front seat passenger; (c) the rear seat passenger disposed behind the front seat passenger and the rear seat passenger disposed behind the driver; and (d) the driver and the rear seat passenger disposed behind the driver.

In vehicles, the seat arrangement is such that the likely position of the head of each occupant is known (generally corresponding to the position of a headrest). Accordingly, one or more or each zone may surround a part of an occupant corresponding to the location of the head of an occupant.

One or more or each zone surrounding part of an occupant may define a "virtual helmet".

The ventilation system may be operable to supply air into the virtual helmet.

Air supplied to the zone surrounding part of an occupant (e.g. the virtual helmet) may be filtered and/or perfumed. Air supplied to the zone surrounding part of an occupant (e.g. the virtual helmet) may have a different condition to air supplied to the remainder of the occupant.

A plurality of air curtain units may be provided to define a plurality of zones surrounding an occupant. For example, in addition to a virtual helmet, a zone may be provided around an occupant's body and/or legs. The ventilation system may by operable to supply air of the same condition into each of the plurality of zones surrounding the occupant, or to supply air of different condition into different zones.

The different condition may be selected from: temperature; humidity; odour; filtered/not filtered; external/recirculated. This allows for example in a heavily polluted environment to focus clean air in the region where it will be breathed and air most suitable for maintaining a pleasant body temperature at the remainder of the body. For example, more humid air may be more pleasant to breath, whilst dryer air may be better to keep the occupant cool.

The vehicle may be an automobile. The vehicle may be a domestic automobile, for example a family car or a sports car.

According to a further aspect of the disclosure there is provided a method of separating a passenger compartment of a vehicle into a plurality of zones, the method comprising supplying air to produce one or more air curtains which separate the passenger compartment into the plurality of zones, wherein one or more or each zone surround part of an occupant; and a ventilation system is operable to supply air of a different condition into different zones.

The method of the may be a method of separating a passenger compartment of a vehicle according to the first aspect of the invention into zones, and may comprise any of the optional features, or combinations of optional features of the first aspect of the invention.

According to a further aspect of the disclosure there is provided a controller for separating a passenger compartment of a vehicle into a plurality of zones, the controller operable to operate one or more air curtains to separate the passenger compartment into the plurality of zones, wherein one or more or each zone surround part of an occupant; and a ventilation system is operable to supply air of a different condition into different zones. The controller may be operable to carry out the method of the second aspect of the invention and/or to control the air curtain units of the first aspect of the invention, in either case optionally including any optional features of combination of optional features.

### Detailed Description of the Invention

In order that the invention may be more clearly understood one or more embodiments thereof will now be described, by way of example only, with reference to the accompanying drawings, of which:
- Figure 1: is a diagrammatic perspective view of an air curtain unit;
- Figure 2: is a schematic side view of a vehicle with the air curtain unit of figure 1 installed therein not within the scope of the claims;
- Figure 3: is a block diagram of the vehicle of figure 2 not within the scope of the claims;
- Figure 4: is a diagrammatic view of another air curtain unit;
- Figure 5: is a diagrammatic perspective view of an alternative manifold for an air curtain unit;
- Figure 6: is a diagrammatic perspective view of another alternative manifold for an air curtain unit, operating in a first state;
- Figure 7: is a diagrammatic perspective view of the manifold of figure 6 operating in a second state;
- Figure 8: is a diagrammatic perspective view of the passenger compartment of a vehicle of an embodiment not within the scope of the claims;
- Figure 9: is a diagrammatic plan view of the passenger compartment of figure 8 not within the scope of the claims;
- Figure 10: is a diagrammatic perspective view of a seat in a passenger compartment;
- Figure 11: is a diagrammatic perspective view of another seat in a passenger compartment; and
- Figure 12: is a schematic view of another air-curtain unit.

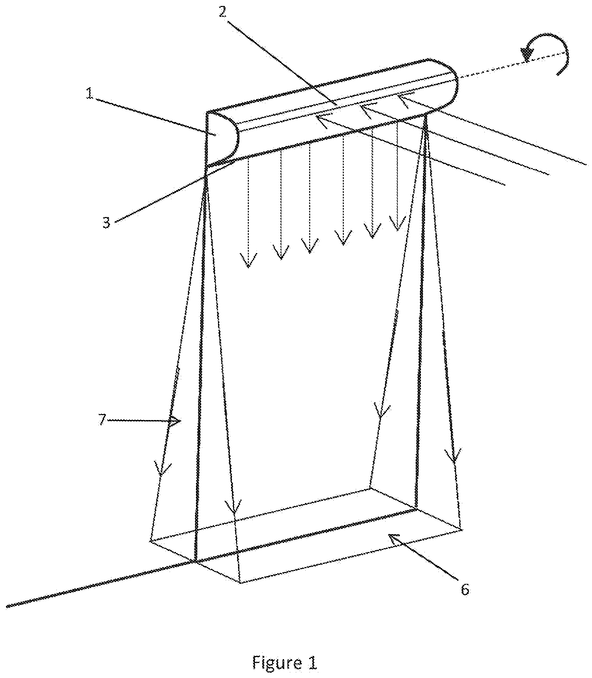

With reference to figure 1, an exemplary air curtain unit 1 is shown. The air curtain unit 1 is elongate and provided with an air intake 2, in the form of a long thin opening along one elongate side and an air outlet 3, in the form of a long thin opening along its elongate base. Within the air curtain unit 1, rotary fan blades (not shown) are provided, arranged to force air from the air intake 2 out of the outlet as an air curtain 4, i.e. a broad and thin stream of air - broad, as the stream extends along the entire length of the air curtain unit 1, and thin, because the outlet is thin, but extends along the entire the length of the unit 1, and the curtain of air remains focussed and narrow.

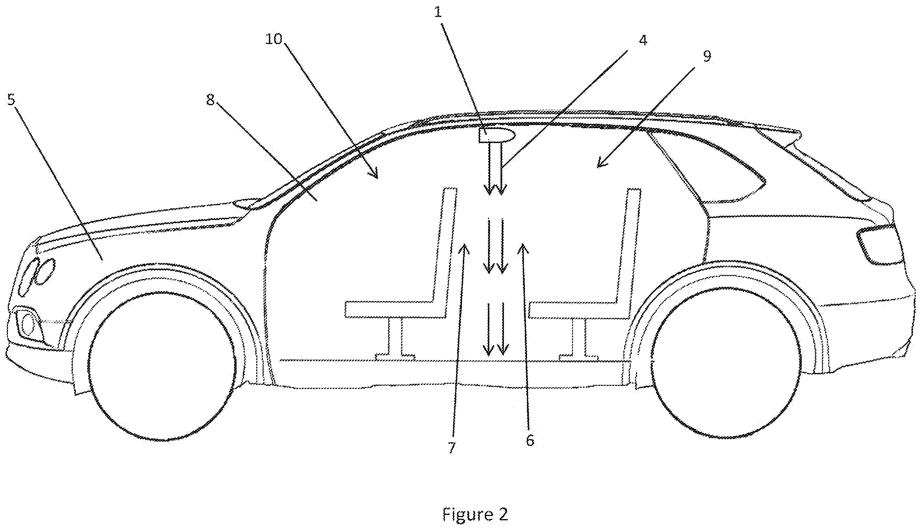

As shown in figure 2, the air curtain unit 1 can be installed in the interior of a vehicle, in this case an automobile 5, and separates one side 6 of the air curtain 4, from the other side 7 of the air curtain 4. This is not within the scope of the claims, but useful in understanding the invention. In this example, the air curtain unit 1 is arranged such that it extends laterally across the passenger compartment 8 of the vehicle, such that the air curtain 4 divides the passenger compartment 8 into two zones, one zone 9 in the rear of the vehicle on one side 6 of the air curtain 4, and the other zone 10 at the front of the vehicle, on the other side 7 of the air curtain 4. Of course, for example in a sports car, which typically has two seats side-by-side, the air curtain could be arranged longitudinally to provide a first zone on one side of the vehicle and a second zone on the other side.

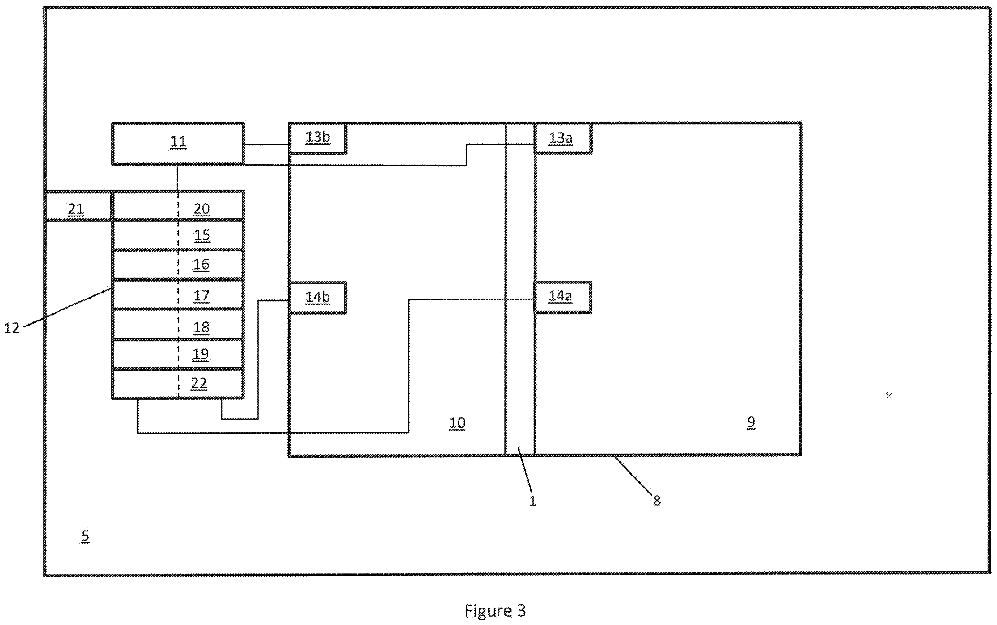

Figure 3 shows as a block diagram, the interaction between the air curtain 1, a controller 11, and a ventilation system 12, which in many ways is conventional, and hence not described in detail. Input devices 13a, 13b (in this example touch-screens) are provided in the first zone 9 and second zone 10 respectively, within easy reach of the occupants of those zones. The input devices 13a, 13b are operable to select whether the air curtain unit 1 is active or not - if the active mode is selected, the controller 11 outputs a signal to the air curtain unit 1 to activate it and cause the air curtain 4 to be generated, to separate the zones 9, 10.

The input devices 13a, 13b are also operable to control, individually for each respective zone 9, 10, and independently of the activity/inactivity of the air curtain, the condition of the air expelled from the ventilation system 12 through a plurality of respective rear blowers 14a, associated with the first zone 9 and a plurality of front blowers 14b associated with the second zone 10. The plurality of front and rear blowers 14a, 14b, are arranged in the vehicle in a manner well known to those skilled in the art, e.g. at floor level, mid-level directed towards the occupants and directed towards the windscreen.

Of course, those skilled in the art will be well aware of the various approaches for selecting air temperature, primarily either (a) using an input such as dial, button, touchscreen or the like, to select a temperature of the incoming air (to the passenger compartment or a zone thereof) between a minimum and a maximum temperature frequently displayed by a selection between a cold (blue) area and a hot (red) area; and (b) using an input such as touchscreen, button, dial, or the like, to select an intended temperature of the passenger compartment (or zone thereof) between a minimum and a maximum temperature frequently displayed in degrees Centigrade or Fahrenheit.

The ventilation system 12 is operated in response an input from the output of the controller 11 (the output from the controller 11 based on the inputs thereto). The ventilation system 12 includes a number of different units which can be independently operated for each zone 9, 10. For that reason, each unit is shown with a dotted line through it, indicating that flow for the respective plurality of blowers 14a, 14b can be independently varied. The ventilation system of this particular embodiment includes an air conditioning unit 15 (which can be activated or inactivated in response to the input, in order to supply conditioned, optionally cold air, as well as cool or hot air); a temperature control unit 16 (to adjust blown air temperature, from cool to hot, with the air conditioning inactive, in response to the input); an inlet air selector 17 (to select external or recirculated air depending on the input); an air flow regulator 18 (to regulate the flow of air, e.g. zero to max for each blower of each plurality of blowers 14a, 14b, in response to the input); and a humidity controller 19 (to adjust the humidity of the supplied air in response to the input). A filter 20 is provided at the air inlet 21 and can be bypassed in response to the input; and an air freshener unit 22 is provided at the outlet to the blowers, (which can be selected or bypassed, depending on whether perfumed air is selected with the input and if selected will add scent to the blown air).

In operation, the occupants in the vehicle 5 can select the condition and quantity of the air they want to be blown through their respective blowers 14a, 14b, along with which of the respective blowers the air is blown through, using the input devices 13a, 13b. Moreover, in the event that they wish to have separate zones of air, they can each choose to activate the air curtain unit 1, so as to create a curtain of air 4 to separate the front zone 10 from the rear zone 9. Thus, the occupants in the front and rear can enjoy different conditioned air, suited to their individual tastes or attire, without the negative aspects of a physical barrier between the front and rear of the automobile 5, such as complications in communication or occasional physical interaction (which can take place through the air curtain 4).

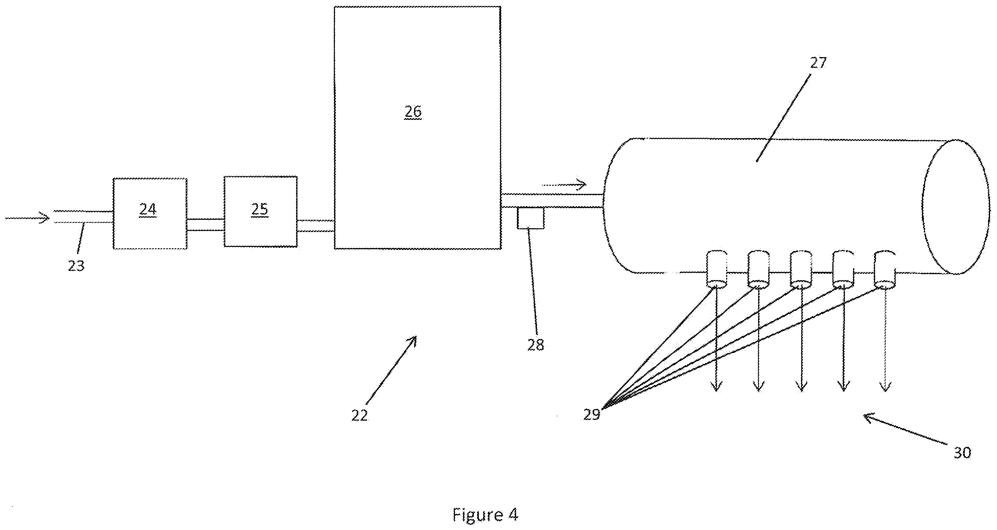

An alternative air curtain unit 22 is shown in figure 4. In this further example of an air curtain unit, the unit 22 replaces the air curtain unit 1 described above and is controlled in the same manner by the controller 11.

The alternative air curtain unit 22 has a supply inlet 23 arranged to draw in external air, a filtration system 24 to filter the air, a pump/compressor 25 to suck in the air, through the filtration system, and supply it to a high pressure clean air accumulator/reservoir 26. The accumulator/reservoir is connected to an outlet manifold 27 via a control valve 28, and the manifold 28 is an elongate vessel provided with a plurality of nozzles 29 to regulate and direct airflow, so as to produce an air curtain 30, which fulfils the same role as the air curtain 4 discussed above. In this example five outlet nozzles are shown, but of course more may be provided so as to direct pressurised air in a broader thin stream; the adjacent nozzles producing individual streams that converge to produce a continuous air curtain 30.

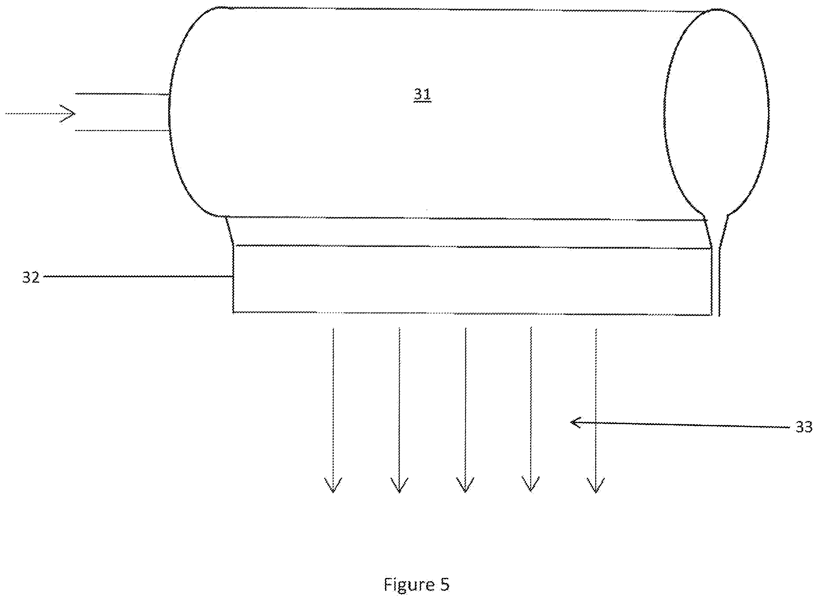

As shown in figure 5, in another example of an air curtain unit, in place of the manifold 28, with its plurality of adjacent nozzles, an elongate manifold 31 can be provided, which has a single long thin opening in a nozzle 32, which extends the length of the elongate manifold, so as to produce a stream of air that is continuous from the moment it exits the nozzle, forming an air curtain 33.

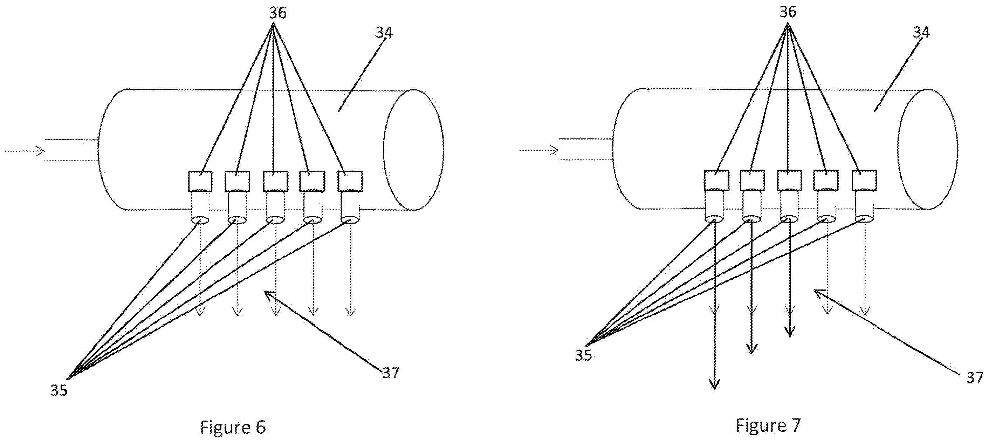

A further alternative example of an air curtain unit is shown in figures 6 and 7. The manifold 34 of figures 6 and 7 can replace both the control valve 28 and manifold 27 of the air curtain unit 22 of figure 4, receiving its air supply directly from the accumulator/reservoir 26. Again, a plurality of nozzles 35 are provided along the length of the manifold 34. For simplicity, only five nozzles are shown, and the manifold is shown as a single straight component, but the approach of figures 6 and 7, with individually controlled nozzles would be especially suited to more complicated shapes, for example a cross shape, splitting the interior of a passenger compartment into four zones. In order that despite the absence of the control valve 27, the air from the accumulator/reservoir 26 does not constantly flow out of the manifold 34, each nozzle is provided with its own independently controllable control valve 36. In consequence, the flow along the length of the manifold 34 can be adjusted; thus, if the signal from the controller 11 requires that the valves 36 associated with each nozzle 35 are opened to the same extent, a uniform air curtain 37 is produced (as shown in figure 6), but if the extent of opening of the valves 36 is varied along the manifold 34, the air curtain 37 that is produced is non-uniform as shown in figure 7. This can allow the curtain to fit to a shape - for example, an air curtain 37 extending down the middle of an automobile may need to be stronger in certain areas where it must extend from ceiling to floor than other areas, where an arm-rest or seat is provided. It also allows certain parts of the air curtain 37 to be enabled whilst others are disabled. For example, in the example mentioned above of a cross shape, splitting the interior of a passenger compartment into four zones, certain limbs of the cross could be deactivated, whilst others are activated, so as to close off just one of the four zones, or to split the passenger compartment into two or three zones, rather than four.

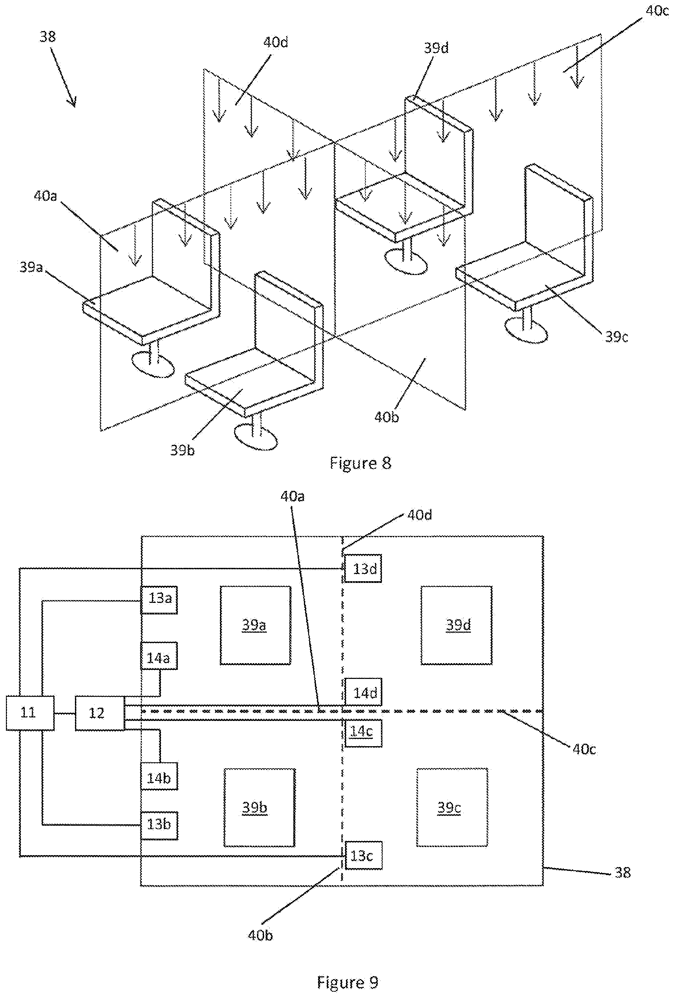

Figures 8 and 9 show the passenger compartment 38 of an automobile not within the scope of the claims, but useful in the understanding of the invention. The automobile is provided with a cross-shaped air curtain unit having a manifold with control valves provided for each nozzle, as set out in relation to figures 6 and 7. For simplicity, the air curtain unit, which would be mounted in the ceiling of the automobile is not shown, similarly, whilst an outline is provided in figure 9 to show the boundary of the passenger compartment, no detail (e.g. doors, windows and suchlike) is shown in either figure 8 or 9.

In figures 8 and 9, four seats are shown in the conventional arrangement found in many family cars, especially coupes. In this example, the vehicle is right hand drive, having a driver's seat 39a at the front right hand side; a front passenger seat 39b at the front left hand side; a left hand rear passenger seat 39c behind the front passenger seat 39b; and a right hand rear passenger seat 39d alongside the left hand side rear passenger seat 39d and behind the driver's seat 39a.

The air curtain unit is operable by selective operation of the control valves (not shown) so as to produce four air curtains (or air curtain sections); a first air curtain 40a between each of the seats 39a, 39b for the front seat driver and the front seat passenger; a second air curtain 40b between the front passenger's seat 39b and the rear seat 39c disposed behind the front seat passenger; a third air curtain 40c between the rear passengers' seats 39c, 39d; and a fourth air curtain 40d between the driver's seat 39a and the rear seat 39d disposed behind the driver.

As in the earlier example, a ventilation system 12 and a controller 11 are provided. The controller 11 receives inputs from four input devices 13a, 13b, 13c, 13d each associated with a respective seat 39a, 39b, 39c, 39d. The ventilation system 12 is operable to provide air in a condition corresponding to each of the four independent inputs 13a-d, to four corresponding sets of blowers 14a, 14b, 14c, 14d associated with respective seats 39a, 39b, 39c, 39d. Thus, a different condition of air can be supplied towards each seat as desired.

Of course, the controller 11 also (independently) controls the activation of the air curtains 40a-40d in response to the inputs from the input devices 13a-d.

Depending on the inputs, the air curtains 40a-d can be activated independently, so, for example, a zone surrounding only one seat may be selected - for example, the driver may input that he/she requires an individual zone, but the remaining passengers may input that they do not require an individual zone and are prepared to have a shared condition of air. In response, the controller 11 controls the relevant control valves in the nozzles of the air curtain unit, such that only the first air curtain 40a between each the front seat driver and the front seat passenger and the fourth air curtain 40d between the driver's seat 39a and the rear seat 39d disposed behind the driver are activated.

Thus one zone surrounds the driver alone, and another merged zone surrounds the remaining three seats. The driver is then able to select (using his/her input 13a) the condition of air to be blown through the blowers 14a within his/her zone, and the remaining passengers can select the condition of air to be blown through the remaining blowers 14b-d; the conditions being selected from the same options set out above in relation to the first example.

The controller 11 could automatically enable or disable the air curtains in response to a comparison of the inputs in relation to air condition - disabling where the desired air condition in different zones is identical/similar and enabling the air conditions when the desired air condition is dissimilar.

Obviously, since the control valves for the nozzles of this embodiment are independently controllable, various options for individual zones or merged zones can be selected. For example, a first zone may comprise only a driver's seat 39a, a second zone may comprise a front seat passenger's seat 30b and a third zone may comprise both rear seat passengers' seats 39c, 39d, alternatively, the front and rear could be split as a front zone and a rear zone, or a zone could be provided for each side.

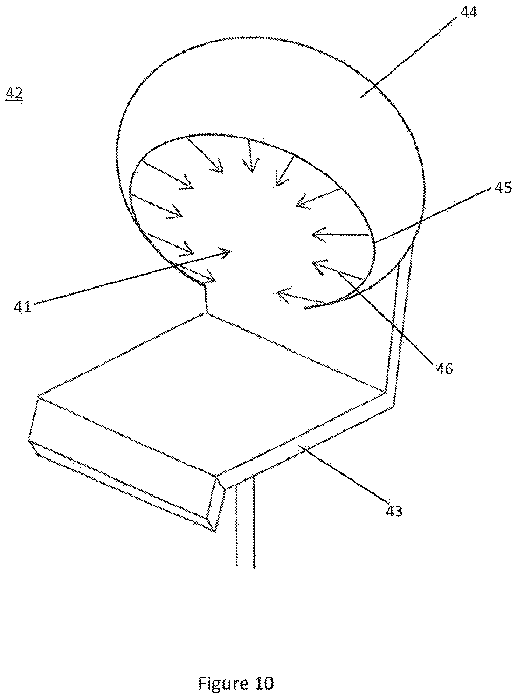

In the examples discussed above, the zones are large enough that an occupant in each seat will be within a zone. However, according to the claimed invention, an embodiment of which is shown in figure 10, a first zone 41 in the passenger compartment that is separated from the remainder (i.e. another zone 42) surrounds only part of an occupant. In particular, a seat 43 of the vehicle is provided with a hood 44 arranged to surround the headrest of the seat 43 extending around the rear and sides of the seat occupant's head. The hood 44 also extends forward of the occupant's head at the top, such that a mouth 45 is defined at the front, the mouth 45 being at an angle to the upright position, with the sides of the hood 44 tapering downward and backwards, so that the hood does not excessively reduce vision.

At the mouth 45 of the hood 44 nozzles of an air-curtain unit are arranged, so as to blow an air-curtain 46 across the mouth 45, maintaining a different environment within the hood 44 (where an occupant's mouth and nose will be) to the environment outside the hood 44, providing a "virtual helmet" of air.

In exactly the same manner as described in relation to figure 3, a set of blowers (not shown) are provided to blow into the first zone 41 and blowers (not shown) are provided to blow into the remainder. One or more input device is provided to select whether the air curtain 46 is activated and the condition of (a) air blown into the first zone 41 and (b) air blown into the second zone. In particular, the input can be used to select filtered and perfumed air to be supplied to the virtual helmet, whilst air supplied to the second zone 42 can have a different condition (e.g. unfiltered and unperfumed).

Whilst it is preferred that the condition of the different areas can be selected with an input device, the invention envisages a controller automatically providing different condition air into one zone compared to that in another. In particular, clean, filtered air in the region where it will be breathed and air most suitable for maintaining a pleasant body temperature at the remainder of the body. For example, more humid air may be more pleasant to breath, whilst dryer air may be better to keep the occupant cool.

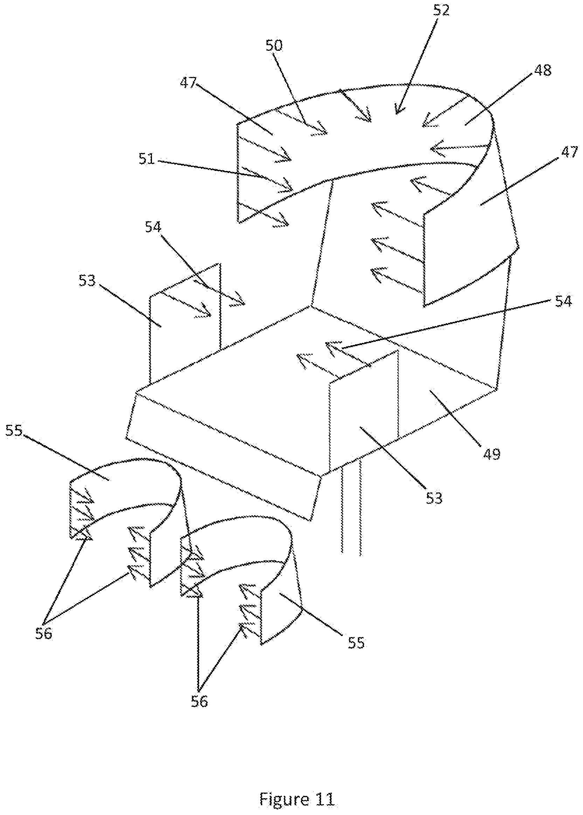

Another arrangement of air curtains according to the invention is shown in figure 11. Here, a plurality of air curtain units are provided to define a plurality of zones surrounding an occupant. First, a virtual helmet is again provided, this time by a pair of wings 47 extending forward from the headrest 48 of a seat 49; the wings and the top of the headrest 48 are provided with air curtain units arranged to provide an air curtain 50 above the occupant's head, and an air curtain 51 in front of him/her, in order to define a first "virtual helmet" zone 52. Additional side-units 53 are provided on either side of the seat extending to a height slightly above that where the top of an occupant's thighs. These may, for example be built into armrests. The side units are arranged with air curtain units which direct a curtain of air 54 across the top of the occupant's legs. Ankle cuffs 55 are also provided, which surround the occupant's lower-legs, and are each provided with air curtain units which provide an air curtain 56 extending in front of the occupant's shins. Whilst the drawings are only schematic and appear to have large gaps, in practice, those skilled in the art will readily produce air curtains which provide an adequate separation of air within the leg-zone defined by the side units 53 and ankle cuffs 55, such that further blowers (not shown) can be provided within the cuffs 55 and/or side units 53, to blow air of a different condition (as determined by a controller e.g. the controller 11 discussed above) at the occupant's legs, from that blown towards his/her head from blowers (not shown) in the virtual helmet zone 52, and different still from air in the remainder of the vehicle (which could be controlled, for example, so as not to be conditioned at all, in order to minimise energy use).

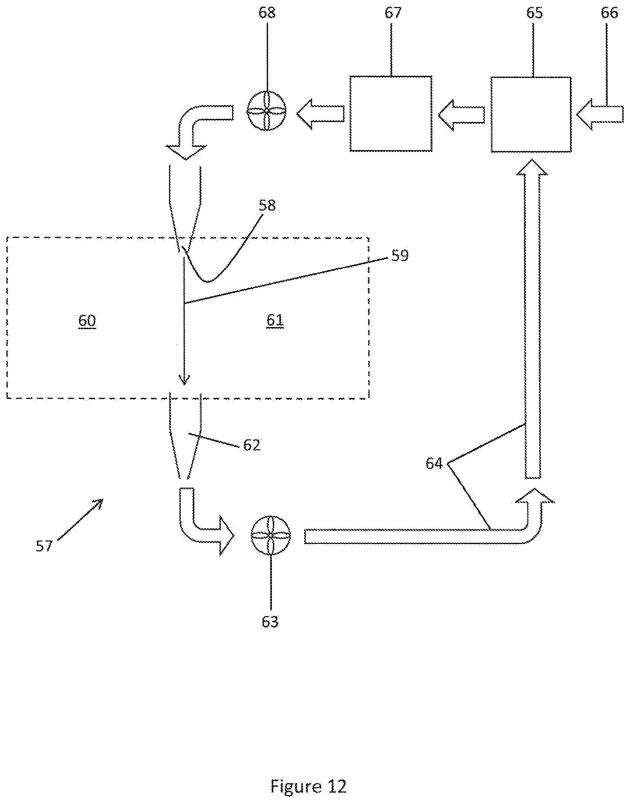

Figure 12 shows schematically an alternative air-curtain unit, which could be used in place of those discussed above and may be particularly useful as a replacement for the examples of figures 10 and 11, where flows of air curtains meet, which could cause turbulence in that region. The air curtain unit 57 of figure 12 has an outlet 58 of a manifold 69, which, in common with the air units discussed above blows a thin broad stream of air, providing a curtain 59 with a laminar air flow, which separates a first zone 60 from a second zone 61. The primary difference in this example, which makes it suitable to replace air curtains where flows meet, is that opposite the outlet from the manifold 69, at the other end of the air curtain 59, an intake valve 62 is provided. This intake valve 62 is connected to an efficient silent fan 63, which creates a low-pressure region at the intake 62, sucking in the air from the air curtain 59, rather than allowing turbulence to occur at its end. The fan 63 sucks the air through a return duct 64 to a mixing chamber 65, which is provided with a valve to regulate the amount of external air allowed to enter the chamber from an external air intake duct 66. The mixing chamber 65 is connected (downstream) to an air filter 67, which is provided upstream of a further efficient and silent fan 68, which provides air to the manifold 69 such that it can flow out of the outlet 58 as discussed above. In this way, the air of the air curtain 59 can be recirculated and added to with external air as necessary/desired.

The above embodiments are described by way of example only. Many variations are possible without departing from the scope of the invention as defined in the appended claims.

## Claims

1. A vehicle (5) comprising a passenger compartment (8), the vehicle (5) comprising a plurality of air curtain units operable to produce one or more air curtains (46,50,51,54,56) to separate the passenger compartment (8) into a plurality of zones (41,42,52); wherein the plurality of zones (41,42,52) surround an occupant; and a ventilation system is operable to supply air of a different condition into the different zones (41,42,52); and further comprising a plurality of blowers in the different zones for blowing the air of different conditions supplied by the ventilation system into the separated zones (41,42,52).

2. A vehicle (5) according to claim 1 wherein the air curtain unit comprises one or more long thin openings in a nozzle, or a plurality of adjacent nozzles, arranged to direct pressurised air in a broad stream; and optionally wherein output from individual nozzles is individually controllable.

3. A vehicle (5) according to any of the preceding claims wherein the ventilation system is selectively operable to supply cool or hot air to the blowers; and/or to supply cold, cool or hot air to the blowers.

4. A vehicle (5) according to any preceding claim wherein the ventilation system is selectively operable to supply external or recirculated air; and/or optionally operable to supply air at a selectable humidity.

5. A vehicle (5) according to any preceding claim wherein the ventilation system is selectively operable to supply perfumed or non-perfumed air.

6. A vehicle (5) according to any preceding claim comprising a controller operable to control the or each air curtain unit; the ventilation system; and the flow of air from the blowers in the different zones (41,42,52) separated by the or each air curtain (46,50,51,54,56).

7. A vehicle (5) according to claim 6 wherein the controller is capable of switching the air curtain (46,50,51,54,56) between an active and an inactive state independently of the state of the blowers.

8. A vehicle (5) according to any preceding claim wherein one or more zones (41,52) surround a part of an occupant corresponding to the location of the head of an occupant, thereby defining a virtual helmet (52).

9. A vehicle (5) according to claim 8 wherein the ventilation system is operable to supply air into the virtual helmet (52).

10. A vehicle (5) according to claim 9 operable to supply filtered and/or perfumed air to the virtual helmet (52) and air of a different condition to the remainder of the occupant.

11. A vehicle (5) according to any preceding claim wherein one zone (52) defines a virtual helmet and another zone corresponds to the body and/or legs of an occupant and the different condition is selected from: temperature; humidity; odour; filtered/not filtered; external/recirculated.

12. A vehicle (5) according to any preceding claim which is an automobile (5); and optionally a domestic automobile.

## Patentansprüche

1. Fahrzeug (5), umfassend einen Fahrgastraum (8), wobei das Fahrzeug (5) eine Mehrzahl von Luftvorhangeinheiten umfasst, die betreibbar sind, um einen oder mehrere Luftvorhänge (46, 50, 51, 54, 56) zu erzeugen, um den Fahrgastraum (8) in eine Mehrzahl von Zonen (41, 42, 52) zu separieren; wobei die Mehrzahl von Zonen (41, 42, 52) einen Insassen umgeben; und wobei ein Belüftungssystem betreibbar ist, um Luft mit unterschiedlichen Eigenschaften in die verschiedenen Zonen (41, 42, 52) zuzuführen; und ferner umfassend eine Mehrzahl von Gebläsen in den verschiedenen Zonen zum Blasen der vom Belüftungssystem zugeführten Luft mit unterschiedlichen Eigenschaften in die separierten Zonen (41, 42, 52).

2. Fahrzeug (5) gemäß Anspruch 1, wobei die Luftvorhangeinheit eine oder mehrere lange, schmale Öffnungen in einer Düse, oder eine Mehrzahl benachbarter Düsen umfasst, die so angeordnet sind, dass sie Druckluft in einem breiten Strahl ausrichten; und wobei optional die Ausgabe der einzelnen Düsen individuell steuerbar ist.

3. Fahrzeug (5) gemäß einem der vorhergehenden Ansprüche, wobei das Belüftungssystem selektiv betreibbar ist, um kühle oder heiße Luft den Gebläsen zuzuführen; und/oder um kalte, kühle oder heiße Luft den Gebläsen zuzuführen.

4. Fahrzeug (5) gemäß einem der vorhergehenden Ansprüche, wobei das Belüftungssystem selektiv betreibbar ist, um externe oder rezirkulierte Luft zuzuführen; und/oder optional betreibbar ist, um Luft mit einer selektierbaren Feuchtigkeit zuzuführen.

5. Fahrzeug (5) gemäß einem der vorhergehenden Ansprüche, wobei das Belüftungssystem selektiv betreibbar ist, um parfümierte oder nicht parfümierte Luft zuzuführen.

6. Fahrzeug (5) gemäß einem der vorhergehenden Ansprüche, umfassend eine Steuerung, die betreibbar ist, um die oder jede Luftvorhangeinheit; das Belüftungssystem; und den Luftstrom aus den Gebläsen in den verschiedenen Zonen (41, 42, 52), die durch den oder jeden Luftvorhang (46, 50, 51, 54, 56) separiert sind, zu steuern.

7. Fahrzeug (5) gemäß Anspruch 6, wobei die Steuerung in der Lage ist, den Luftvorhang (46, 50, 51, 54, 56) unabhängig vom Zustand der Gebläse zwischen einem aktiven und einem inaktiven Zustand zu schalten.

8. Fahrzeug (5) gemäß einem der vorhergehenden Ansprüche, wobei eine oder mehrere Zonen (41, 52) einen Teil eines Insassen umgeben, der der Position des Kopfes eines Insassen entspricht, wodurch ein virtueller Helm (52) definiert wird.

9. Fahrzeug (5) gemäß Anspruch 8, wobei das Belüftungssystem betreibbar ist, um Luft in den virtuellen Helm (52) zuzuführen.

10. Fahrzeug (5) gemäß Anspruch 9, das betreibbar ist, um gefilterte und/oder parfümierte Luft an den virtuellen Helm (52) und Luft mit anderen Eigenschaften an den Rest des Insassen zuzuführen.

11. Fahrzeug (5) gemäß einem der vorhergehenden Ansprüche, wobei eine Zone (52) einen virtuellen Helm definiert und eine andere Zone dem Körper und/oder den Beinen eines Insassen entspricht und die unterschiedliche Eigenschaft ausgewählt ist aus: Temperatur; Feuchtigkeit; Geruch; gefiltert/nicht gefiltert; extern/ rezirkuliert.

12. Fahrzeug (5) gemäß einem der vorhergehenden Ansprüche, das ein Automobil (5) ist; und optional ein inländisches Automobil.

## Revendications

1. Un véhicule (5) comprenant un compartiment (8) pour passagers, le véhicule (5) comprenant une pluralité d'unités à coussin d'air pouvant fonctionner pour produire un ou plusieurs coussins (46, 50, 51, 54, 56) d'air afin de séparer le compartiment (8) pour passager en une pluralité de zones (41, 42, 52) ; dans lequel la pluralité de zones (41, 42, 52) entourent un occupant ; et un système de ventilation pouvant fonctionner pour envoyer de l'air d'un état différent dans différentes zones (41, 42, 52) ; et comprenant en outre une pluralité de soufflantes dans les différentes zones pour souffler de l'air d'états différents envoyé par le système de ventilation dans les zones (41, 42, 52) séparées.

2. Un véhicule (5) suivant la revendication 1, dans lequel l'unité à coussin d'air comprend une ou plusieurs longues ouvertures minces dans une buse ; ou une pluralité de buses voisines agencées pour diriger de l'air sous pression en un courant large ; et dans lequel éventuellement la sortie de buse individuelle peut être commandée individuellement.

3. Un véhicule (5) suivant l'une quelconque des revendications précédentes, dans lequel le système de ventilation peut fonctionner sélectivement pour envoyer de l'air froid ou chaud aux soufflantes ; et/ou pour envoyer de l'air froid, frais ou chaud aux soufflantes.

4. Un véhicule (5) suivant l'une quelconque des revendications précédentes, dans lequel le système de ventilation peut fonctionner sélectivement pour envoyer de l'air extérieur ou recirculé ; et/ou peut fonctionner éventuellement pour envoyer de l'air à une humidité pouvant être sélectionnée.

5. Un véhicule (5) suivant l'une quelconque des revendications précédentes, dans lequel le système de ventilation peut fonctionner sélectivement pour envoyer de l'air parfumé ou non parfumé.

6. Un véhicule (5) suivant l'une quelconque des revendications précédentes, comprenant une unité de commande pouvant fonctionner pour commander la ou chaque unité à coussin d'air ; le système de ventilation ; et le courant d'air des soufflantes dans les différentes zones (41, 42, 52) séparées par le un ou chaque coussin (46, 50, 51, 54, 56) d'air.

7. Un véhicule (5) suivant la revendication 6, dans lequel l'unité de commande est apte à commuter le coussin (46, 50, 51, 54, 56) d'air entre un état actif et un état inactif indépendamment de l'état des soufflantes.

8. Un véhicule (5) suivant l'une quelconque des revendications précédentes, dans lequel une ou plusieurs zones (41, 52) entourent une partie d'un occupant correspondant à l'emplacement de la tête d'un occupant, en définissant ainsi un casque (52) virtuel.

9. Un véhicule (5) suivant la revendication 8, dans lequel le système de ventilation peut fonctionner pour envoyer de l'air dans le casque (52) virtuel.

10. Un véhicule (5) suivant la revendication 9 pouvant fonctionner pour envoyer de l'air filtré et/ou parfumé au casque (52) virtuel et de l'air d'un état différent au reste de l'occupant.

11. Un véhicule (5) suivant l'une quelconque des revendications précédentes, dans lequel une zone (52) définit un casque virtuel et une autre zone correspond au corps et/ou aux jambes d'un occupant et l'état différent est choisi parmi : température ; humidité ; odeur ; filtré/non filtré ; extérieur/recirculé.

12. Un véhicule (5) suivant l'une quelconque des revendications précédentes, qui est une automobile (5) ; et éventuellement une automobile domestique.
